Europäisches Patentamt

European Patent Office

Office européen des brevets

(11) Numéro de publication: **0 297 939 B1**

# FASCICULE DE BREVET EUROPEEN

(45) Date de publication de fascicule du brevet: **10.02.93** (51) Int. Cl.⁵: **G05D 1/06**

(21) Numéro de dépôt: **88401435.8**

(22) Date de dépôt: **10.06.88**

(54) **Système pour l'élaboration d'un signal d'alarme à bord d'un aéronef en cas de minitornade.**

(30) Priorité: **18.06.87 FR 8708533**

(43) Date de publication de la demande:
**04.01.89 Bulletin 89/01**

(45) Mention de la délivrance du brevet:
**10.02.93 Bulletin 93/06**

(84) Etats contractants désignés:
**DE ES GB IT NL SE**

(56) Documents cités:
**EP-A- 0 125 087**
**EP-A- 0 229 197**

(73) Titulaire: **AEROSPATIALE SOCIETE NATIONA-
LE INDUSTRIELLE Société Anonyme dite:
37, Boulevard de Montmorency
F-75016 Paris(FR)**

(72) Inventeur: **Bonafe, Jean-Louis
33 Bld Deltour
F-31500 Toulouse(FR)**

(74) Mandataire: **Bonnetat, Christian et al
CABINET BONNETAT 23, Rue de Léningrad
F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un système pour l'élaboration, à bord d'un aéronef, d'un signal d'alarme en cas de minitornade.

Par "minitornade", il faut entendre les perturbations météorologiques désignées communément en aéronautique par les mots anglo-saxons de "windshear", "downburst" ou "microburst".

De telles minitornades sont essentiellement constituées de violents courants d'air tourbillonnants et descendants, dont la vitesse peut être supérieure à 10 m/s et qui présentent des composantes de vitesse horizontales.

Bien que la probabilité pour qu'un aéronef rencontre une telle minitornade au cours de son décollage ou de son atterrissage soit faible, il n'en reste pas moins que le danger existe qu'un aéronef soit plaqué au sol par une minitornade pendant ces phases de vol, au cours desquelles sa marge de sécurité est relativement sensible. C'est ainsi que l'on estime qu'au cours des vingt dernières années, les minitornades sont responsables d'une trentaine d'accidents de décollage et d'atterrissage ayant entraîné plus de 600 morts.

Le phénomène météorologique des minitornades est bien entendu détectable au sol et l'on a déjà pensé à équiper les aérodromes de détecteurs appropriés, mais l'expérience a malheureusement prouvé que la détection des minitornades au sol même avec des moyens complexes, ne pouvait pas, à l'heure actuelle, permettre une alarme dans un délai suffisamment court à bord d'un aéronef pour éviter tout danger.

Aussi, on a déjà pensé à prévoir à bord des aéronefs des systèmes de détection de minitornade susceptibles de délivrer un signal d'alarme, lorsque la force de celle-ci dépasse un seuil prédéterminé.

Comme on le verra ci-après, les composantes verticale et horizontale de vitesse de courants d'air sont facilement calculables en tout point d'une minitornade, à partir des informations inertielles, anémométriques et d'incidence délivrées par les équipements spécialisés, embarqués à bord des aéronefs modernes. Aussi, dans les systèmes connus mentionnés ci-dessus, on exploite lesdites composantes verticale et horizontale de vitesse. Cependant, il en résulte de nombreuses alarmes intempestiives. En effet, ces systèmes connus ne peuvent prendre en compte l'énergie de l'aéronef, due essentiellement à la vitesse de celui-ci, au moment des mesures desdites composantes de vitesse des courants d'air. Par suite, que l'aéronef se déplace lentement ou rapidement, les systèmes d'alarme connus se déclenchent pour les mêmes valeurs desdites composantes. Or, même lorsque les valeurs de déclenchement de ces composantes sont franchies, il peut n'en résulter aucun danger pour l'aéronef, si celui-ci a acquis une énergie élevée.

La présente invention a pour objet de remédier à cet inconvénient des systèmes de détection connus. Elle concerne un système présentant une très grande sensibilité de déclenchement d'alarme, mais évitant les alarmes intempestives.

A cette fin, selon l'invention, le système pour l'élaboration à bord d'un aéronef d'un signal d'alarme cas de minitornade, comportant un dispositif de calcul permettant l'obtention de signaux représentatifs des vitesses du vent horizontal et du vent vertical, auxquels est soumis ledit aéronef, à partir des informations de vitesses, d'assiette et d'incidence délivrées par l'équipement de bord dudit aéronef, est remarquable en ce qu'il comporte :
- des moyens de dérivation pour calculer la dérivée du signal représentatif de ladite vitesse du vent horizontal par rapport au temps ;
- des premiers moyens pour former un premier signal représentatif des valeurs positives de ladite dérivée ;
- des seconds moyens pour former un signal représentatif des valeurs négatives de ladite dérivée ;
- des premiers moyens de sommation délivrant un troisième signal obtenu par l'addition dudit signal représentatif de ladite vitesse du vent vertical et lesdits premier et second signaux et par la soustraction dudit signal représentatif de la vitesse moyenne du vent horizontal pendant une période antérieure à celle des opérations effectuées par ledit système ;
- des seconds moyens de sommation pour former la somme de ladite information d'incidence et dudit troisième signal;
- des moyens pour comparer ladite somme et un seuil prédéterminé d'incidence garantissant une énergie minimale de sécurité de l'aéronef ; et
- des moyens d'alarme susceptibles d'émettre un signal d'alarme lorsque ladite somme est supérieure audit seuil prédéterminé d'incidence.

Ainsi, selon l'invention, les composantes de vitesse horizontale et de vitesse verticale des courants d'air d'une minitornade sont prises en compte par la détermination de la vitesse du vent horizontal et de la vitesse du vent vertical, respectivement, pour, comme cela sera expliqué plus en détail par la suite, déterminer une incidence de compensation (ledit troisième signal), qui, ajoutée à la mesure actuelle d'incidence est comparée à un seuil d'alarme. Grâce à l'invention, on peut donc mettre à profit la relation fixe liant, pour un aéronef déterminé en configuration déterminée, le coefficient de portance et l'incidence. Cette relation permet de déterminer l'incidence de décrochage de cet aéronef, incidence de décrochage à laquelle est attachée une vitesse de décrochage. La présente invention est basée sur les constatations suivantes :

- une forte augmentation du vent de face est un signe précurseur de minitornade ;
- lorsqu'un avion rencontre une minitornade, l'effet de celle-ci est d'abord porteur, avant de devenir déporteur;
- les variations d'incidence, aussi bien positives que négatives, imposées par une minitornade à un aéronef dépendent directement des variations des composantes horizontale et verticale de vitesse des courants d'air de la minitornade, de sorte que les variations de ces composantes sont représentatives de variations d'incidence et sont donc des équivalents d'incidence ;
- ladite composante verticale de vitesse est constamment dirigée vers le bas et a donc constamment un effet déporteur, de sorte que son effet peut être appréhendé grâce à sa seule amplitude ;
- ladite composante horizontale de vitesse, au contraire, correspond d'abord à un vent de face, puis à un vent arrière, ces vents passant par des extrema. Pour étudier son effet, il est donc nécessaire d'appréhender à la fois son amplitude et son signe, ce qui est fait dans le système selon l'invention par le moyen de la dérivée. Il est à remarquer que cette dérivée, en fonction de ce qui précède, correspond donc à un gradient d'incidence. Ce gradient d'incidence est porteur lorsque ladite dérivée est positive et déporteur lorsque ladite dérivée est négative.

On voit donc que, selon l'invention, ledit troisième signal est un signal de compensation d'incidence composé de la somme d'un équivalent d'incidence (le premier signal) dû à un gradient porteur de ladite composante horizontale, d'un équivalent d'incidence (le second signal) dû à un gradient déporteur de ladite composante horizontale, et d'un équivalent d'incidence dû à ladite composante verticale, somme de laquelle est soustrait un équivalent d'incidence correspondant au vent de face qui atteignait l'aéronef avant la mesure. En effet, le vent horizontal calculé par ledit dispositif de calcul doit, pour être significatif de l'existence d'une minitornade, être débarrassé du vent de face moyen, qu'il y a donc lieu de retrancher du signal de compensation d'incidence, en vue d'éviter des alarmes intempestives. De préférence, afin que cette correction par élimination du vent de face moyen soit aussi précise que possible, le système conforme à la présente invention comporte des moyens pour délivrer auxdits premiers moyens de sommation la valeur moyenne sur plusieurs dizaines de secondes de la vitesse dudit vent horizontal.

De plus, par mesure de sécurité, ledit système comporte des moyens de limitation ne permettant de soustraire, dans ledit troisième signal, ladite valeur moyenne de la vitesse du vent horizontal que lorsque la valeur absolue de celle-ci est inférieure à ladite valeur moyenne des valeurs positives de ladite dérivée.

Par ailleurs, pour sensibiliser le déclenchement de l'alarme pour une variation momentanée de ladite composante horizontale, on prévoit de préférence que ledit premier signal délivré par lesdits premiers moyens correspond à la valeur moyenne sur plusieurs secondes des valeurs positives de ladite dérivée, ladite moyenne s'établissant avec une constante de temps plus faible que celle de son effacement.

Afin d'éviter des fonctionnements intempestifs du système selon l'invention pendant des phases de vol où cela ne serait pas désiré, ledit système comporte, entre ledit dispositif de calcul d'une part, et lesdits moyens de dérivation, lesdits premiers et seconds moyens et lesdits premiers moyens de sommation d'autre part, des moyens d'interruption commandée, ouverts lorsque ledit aéronef n'est pas en phase de décollage ou d'atterrissage. Pour que la compensation en incidence apportée par le système de l'invention dépende de l'urgence du danger que la minitornade fait peser sur l'aéronef, un amplificateur, dont le gain est variable en fonction de l'altitude de l'aéronef, peut être disposé entre lesdits premiers et seconds moyens de sommation.

De plus, pour connaître l'importance de la compensation en incidence et pour éventuellement utiliser cette information lors du traitement du signal d'alarme, on peut prévoir des moyens de comparaison de ladite information d'incidence et dudit troisième signal.

De préférence, ledit seuil prédéterminé d'incidence correspond à une vitesse de l'aéronef supérieure d'au moins 10 % à la vitesse de décrochage de l'avion et la valeur dudit seuil prédéterminé d'incidence dépend de la configuration des surfaces aérodynamiques mobiles de l'aéronef.

Par exemple, ce seuil est égal à 1,1 fois la vitesse de décrochage dans la configuration du décollage et à 1,2 fois ladite vitesse de décrochage dans la configuration d'atterrissage. Etant donné qu'un aéronef est plus sensible à l'atterrissage qu'au décollage, la valeur dudit seuil est choisie plus grande pour l'atterrissage que pour le décollage.

Le système selon l'invention est avantageusement incorporé à un calculateur de bord de l'aéronef et son fonctionnement est séquentiel, de sorte que l'incidence de compensation est continuellement adaptée aux conditions de vol présentes de l'aéronef.

On voit ainsi que, selon l'invention :

- on définit un seuil d'alarme pour minitornade qui est fonction de l'incidence actuelle de l'aéronef, incrémentée ou décrémentée d'équivalents d'incidence correspondant à des vents présents et passés et à des variations de vent présentes et passées ; et
- le déclenchement de l'alarme de minitornade intervient lorsque l'incidence actuelle compensée dépasse un seuil critique, prenant en compte la configuration de l'aéronef.

Les figures du dessin annexé feront bien comprendre comment l'invention peut être réalisée. Sur ces figures, des références identiques désignent des éléments semblables.

La figure 1 représente schématiquement une minitornade à différents stades de son évolution au voisinage du sol.

Les figures 2a, 2b et 2c illustrent schématiquement les composantes verticale et horizontale de la vitesse des courants d'air le long de la trajectoire d'un avion traversant une minitornade.

Les figures 3a, 3b et 3c montrent les diagrammes des vitesses concernant un avion avant et pendant la traversée d'une minitornade.

La figure 4 donne le schéma synoptique d'un mode de réalisation du système conforme à la présente invention.

La figure 5 est un diagramme illustrant la formation du signal de compensation d'incidence conformément à la présente invention.

La figure 6 montre un exemple de variation de gain d'amplification appliqué au signal de compensation d'incidence en fonction de l'altitude de l'avion.

La figure 7 est le schéma synoptique d'un mode de réalisation du dispositif d'élaboration du signal d'alarme.

La figure 8 est un diagramme illustrant le processus du choix des seuils d'incidence.

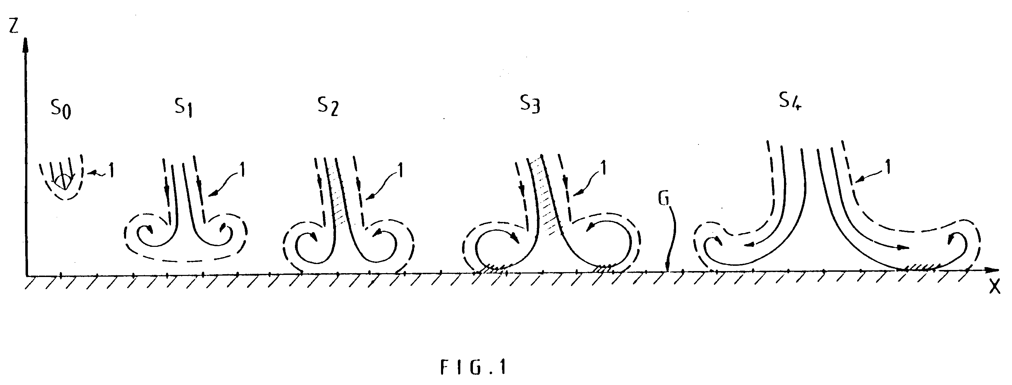

Sur la figure 1, on a représenté schématiquement, à cinq stades S0 à S4 de son évolution, une minitornade 1, que le système selon l'invention est destiné à détecter. Sur le schéma de la figure 1, les axes OX et OZ sont respectivement horizontal et vertical, l'axe OX étant au niveau du sol G. A des fins de clarté de dessin, les cinq stades de l'évolution de la minitornade 1 ont été représentés échelonnés le long de l'axe horizontal OX, mais il va de soi que cette disposition de dessin est arbitraire et pourrait être différente. En revanche, sur les axes OX et OY, on a indiqué des traits équidistants de 1 km, afin de donner l'échelle du phénomène. Une telle minitornade 1 est constituée de courants descendants, qui, après le stade initial de formation SO, divergent en tourbillonnant en direction du sol jusqu'à venir frapper celui-ci. Les parties hachurées de ces courants correspondent à des vitesses supérieures à 10 m/s. Si on désigne par T2 l'instant auquel se produit le stade S2, lorsque la minitornade 1 atteint le sol, les stades S0 et S1 peuvent correspondre respectivement aux instants T2-5 mn et T2-2 mn, tandis que les stades S3 et S4 peuvent correspondre respectivement aux instants T2 + 5 mn et T2 + 10 mn.

On voit ainsi que, surtout aux stades S2 et S3, un avion traversant une minitornade 1 risque d'être violemment plaqué au sol G.

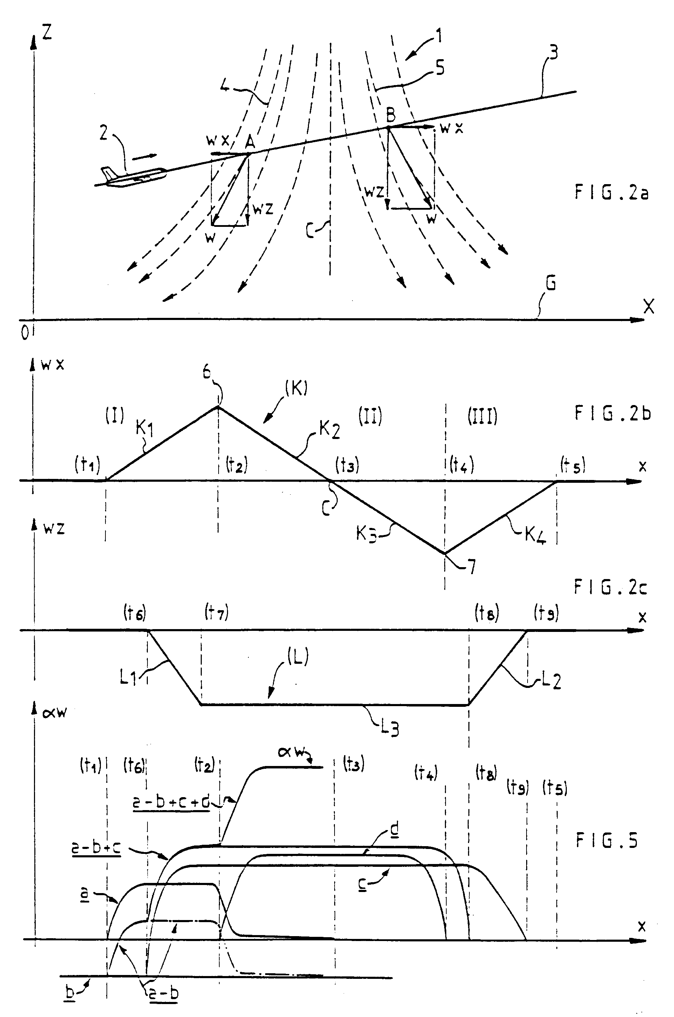

Les diagrammes des figures 2a, 2b et 2c permettent de mieux comprendre les effets d'une minitornade 1 sur un avion 2, dont la trajectoire 3 traverse cette dernière. Sur ces figures, il est supposé que l'avion 2 se déplace de la gauche vers la droite. En tout point A ou B de la minitornade 1, l'avion 2 est soumis par celle-ci à l'action de courants d'air 4, 5 ayant une vitesse W, dont la direction est tangente auxdits courants d'air 4 ou 5 passant par ce point A ou B, ladite vitesse W étant orientée vers le sol G, mais inclinée vers l'extérieur de ladite minitornade 1 par rapport audit sol. Cette inclinaison de la vitesse W vers l'extérieur de la minitornade 1 résulte de la structure divergente des courants d'air de celle-ci. Par suite, si la vitesse W est décomposée en une composante horizontale WX et en une composante verticale WZ, ces composantes sont constamment, et respectivement, dirigées vers l'extérieur de la minitornade et vers le sol.

Il en résulte donc que, lorsque l'avion 2 se déplace de l'extérieur de la minitornade vers le centre C de celle-ci, la composante horizontale WX se comporte en vent de face, alors que, lorsque l'avion 2 se déplace du centre C de la minitornade vers l'extérieur de celle-ci, cette composante horizontale WX se comporte en vent arrière. Bien entendu, dans le centre C de la minitornade, la composante WX s'annule pour permettre l'inversion de sens. De plus, entre la périphérie de la minitornade 1 et le centre C de celle-ci, l'amplitude de la composante horizontale WX est d'abord croissante et ensuite décroissante. Par suite, si l'on représente de façon extrêmement schématique l'évolution de la composante WX par rapport à l'avion 2, en considérant cette composante comme positive ou négative, respectivement lorsqu'elle correspond à un vent de face et à un vent arrière, on obtient une courbe telle que celle désignée par (K) sur la figure 2b.

Lorsque l'avion 2 pénètre dans la minitornade 1, (instant t1), la composante WX, qu'il reçoit de face, commence par croître (partie K1 de la courbe (K)), puis, à partir d'une certaine pénétration à l'intérieur de ladite tornade correspondant à un point 6 (instant t2), décroît bien que restant de face (partie K2 de la courbe (K)). Lorsque l'avion 2 atteint le voisinage du centre C de la minitornade 1 (instant t3), l'amplitude de la composante WX s'annule. Ensuite, l'avion se dirigeant depuis ce centre C vers l'extérieur de la minitornade 1, la composante WX qui a changé de signe pour devenir un vent arrière, prend une amplitude négative croissante (partie K3 de la courbe (K)). A partir d'une certaine approche de la périphérie de la minitornade 1 correspondant à un point 7 (instant t4), l'amplitude négative de la composante WX, qui se comporte toujours comme un vent arrière, décroît (partie K4 de la courbe (K)), jusqu'à devenir nulle à l'extérieur de la minitornade 1 (instant t5).

On voit ainsi que la traversée de la minitornade 1 par l'avion 2 peut être partagée en trois zones (voir la figure 2b), à savoir :

- une zone (I), correspondant à la partie K1 de la courbe (K), dans laquelle le vent de face croît, ce qui engendre un effet porteur ;
- une zone (II), correspondant aux parties K2 et K3 de la courbe (K), dans laquelle le vent de face décroît, puis devient un vent arrière croissant, ce qui, dans les deux cas, engendre un effet déporteur ; et
- une zone (III), correspondant à la partie K4 de la courbe (K), dans laquelle le vent arrière décroît, ce qui engendre un effet porteur.

Si, de façon analogue à ce qui a été fait ci-dessus schématiquement pour la composante horizontale WX de la vitesse W, on trace l'évolution de la composante verticale WZ de cette vitesse le long de la trajectoire 3 de l'avion 2 dans la minitornade 1, on obtient la courbe (L) de la figure 2c. Cette courbe (L) se compose de deux parties d'extrémité L1 et L2, correspondant respectivement à l'accroissement et à la diminution de l'amplitude négative de WZ à la périphérie de la minitornade et d'une partie intermédiaire L3, qui correspond à la plus grande partie de la traversée de la minitornade et dans laquelle l'amplitude négative de WZ est sensiblement constante.

La partie de courbe L1, c'est-à-dire l'accroissement de l'amplitude négative de la composante WZ, commence à un instant t6, en retard par rapport à l'instant t1. De même, la partie de courbe L2, c'est-à-dire la diminution de l'amplitude négative de la composante WZ, se termine à un instant t9, antérieur à l'instant t5. On a désigné respectivement par t7 et t8, les instants auxquels se raccordent les parties L1 et L3, et les parties L3 et L2.

Pour des raisons de simplification et de schématisation, les parties K1 à K4 de la courbe (K) et les parties L1 à L3 de la courbe (L) ont été, sur les figures 2b et 2c, représentées sous la forme de segments de droite.

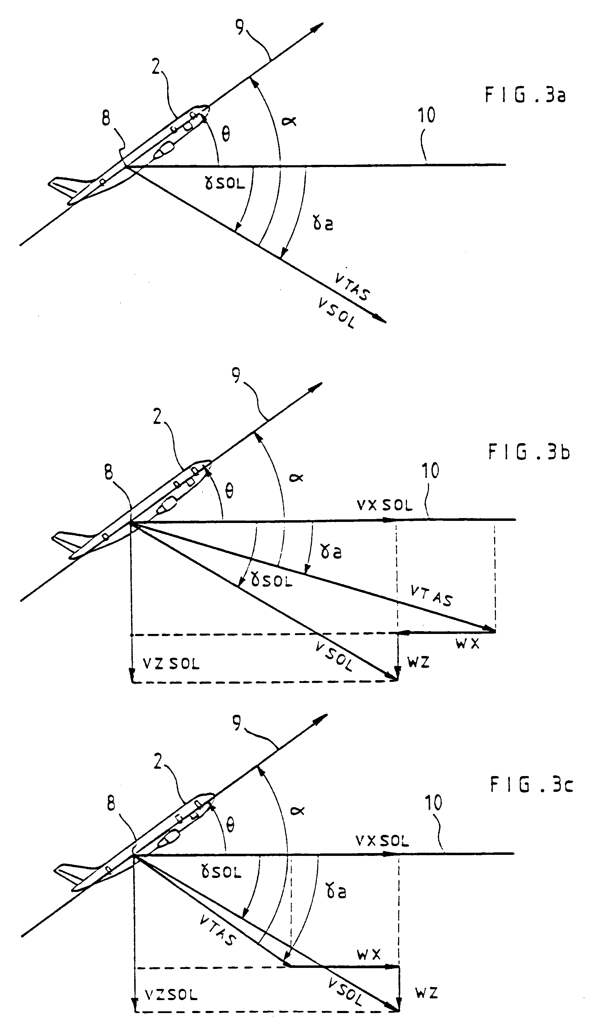

Sur la figure 3a, on a représenté le diagramme des vitesses, appliquées au centre de gravité 8 de l'avion 2 avant sa rencontre de la tornade 1. Sur cette figure 3a, l'axe longitudinal 9 de l'avion 2 est incliné de l'assiette $\theta$ par rapport à la ligne d'horizon 10 (parallèle à l'axe OX) et présente l'incidence $\alpha$ par rapport à la vitesse aérodynamique VTAS, qui, elle-même est inclinée de la pente aérodynamique $\gamma a$ par rapport à la ligne d'horizon 10. Dans ce cas, la vitesse VSOL de l'avion 2 par rapport au sol G est confondue avec la vitesse aérodynamique VTAS.

Lorsque l'avion 2 reçoit un vent vertical et un vent horizontal, par exemple parce qu'il se trouve dans la minitornade 1, ces vents vertical et horizontal, ou composantes WX et WY, interviennent et doivent être composés avec VTAS et VSOL. Puisque la configuration de l'avion 2 n'est pas modifiée, l'assiette $\theta$ reste constante, tandis que la vitesse VSOL et sa pente $\gamma$SOL par rapport à la ligne d'horizon 10 sont inchangées. Il en résulte que l'incidence aérodynamique $\alpha$ et la pente aérodynamique $\gamma a$ varient et que la vitesse aérodynamique VTAS n'est plus confondue avec VSOL.

Si, comme cela est représenté sur la figure 3b, la composante WX se comporte comme un vent de face, l'incidence aérodynamique $\alpha$ devient plus faible que dans le cas de la figure 3a. Cette figure 3b permet de plus de constater que si WX croît en amplitude, l'incidence aérodynamique $\alpha$ décroît et vice-versa.

Par suite, dans la zone (I) de la figure 2b, lorsque WX évolue selon la partie croissante K1 de la courbe (K) avec une dérivée dWX/dt positive, il en résulte une variation négative $\Delta\alpha$ de l'incidence $\alpha$ (effet porteur). En revanche, dans la zone (II) de la figure 2b, lorsque WX suit la partie de courbe décroissante K2 avec une dérivée dWX/dt négative, il s'ensuit une variation positive $\Delta\alpha$ de l'incidence $\alpha$ (effet déporteur).

De façon analogue à ce qui précède, si on compose les vitesses VSOL, WX, WZ et VTAS dans le cas où WX se comporte comme un vent arrière (voir la figure 3c), on constate que si WX croît en amplitude, l'incidence aérodynamique $\alpha$ croît et vice-versa.

Par suite, dans la zone (II) de la figure 2b, lorsque WX suit la partie de courbe décroissante K3 avec une dérivée dWX/dt négative, il en résulte une variation positive $\Delta\alpha$ de l'incidence $\alpha$ (effet déporteur). En revanche, lorsque WX suit la partie croissante K4 de la courbe (K), la dérivée dWX/dt est positive et la variation $\Delta\alpha$ de l'incidence $\alpha$ est négative (effet porteur).

Ainsi, dans tous les cas, on constate que lorsque dWX/dt est positive, $\Delta\alpha$ est négative et vice-versa.

De ce qui précède, et notamment de la comparaison des figures 3a, 3b et 3c, il ressort que la rencontre de l'avion 2 avec une minitornade 1 entraîne d'abord une diminution de l'incidence aérodynamique $\alpha$ dudit avion, suivie d'une augmentation importante de ladite incidence.

De plus, ces figures 3a à 3c, montrent que WX est égale à la différence entre les projections sur l'axe horizontal (ou ligne d'horizon 10) de la vitesse aérodynamique VTAS et de la vitesse VSOL par rapport au sol et que, de même, WZ est égale à la différence entre les projections sur l'axe vertical OZ de la vitesse VSOL et de la vitesse aérodynamique VTAS. On a désigné par VXSOL et VZSOL, respectivement les projections de VSOL sur l'axe OX et sur l'axe OZ.

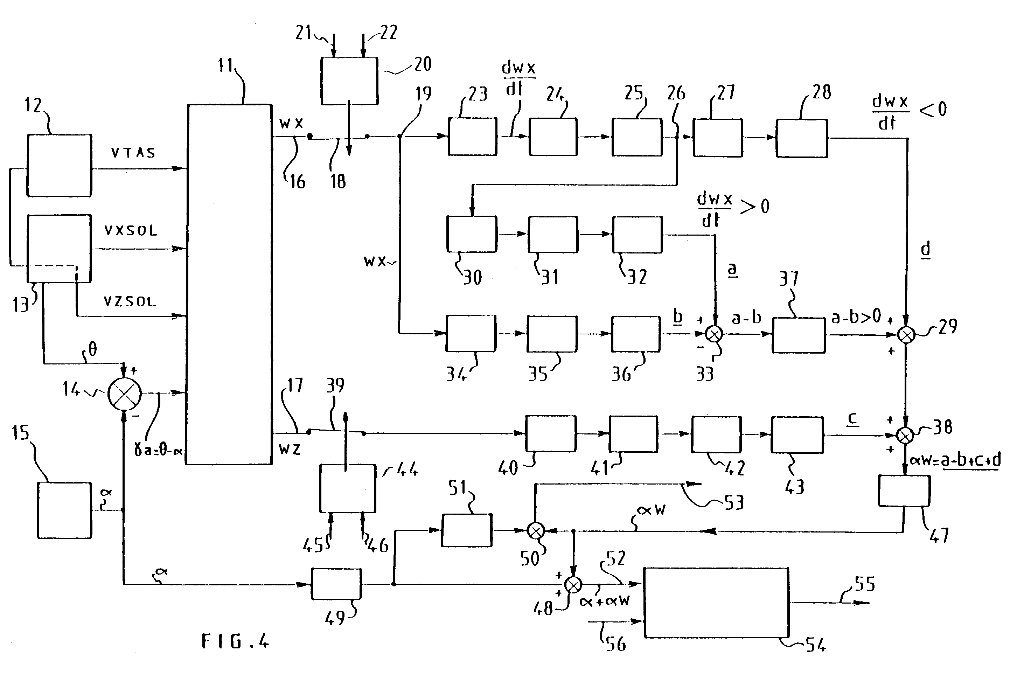

Le système selon l'invention, montré schématiquement sur la figure 4, comporte un dispositif de calcul 11 susceptible de déterminer, à chaque instant, les vitesses du vent horizontal et du vent vertical reçues par l'avion 2, et donc les composantes WX et WZ lorsque celui-ci rencontre la tornade 1. Pour cela, le dispositif de calcul 11 reçoit par exemple :

- la vitesse aérodynamique VTAS provenant du système anémométrique 12 prévu à bord de l'aéronef 2 ;
- les composantes VXSOL et VZSOL (cette dernière composante étant la vitesse verticale baro-inertielle) de la vitesse VSOL de l'avion 2 par rapport au sol, délivrées par la centrale inertielle 13 de bord ;
- la pente aérodynamique $\gamma a$, fournie par un soustracteur 14, recevant, d'une part, l'assiette $\theta$ délivrée par la centrale inertielle 13 et, d'autre part, l'incidence aérodynamique $\alpha$ délivrée par des sondes d'incidence 15, montées à bord dudit aéronef 2. Le soustracteur 14 réalise l'opération $\gamma a = \theta - \alpha$ .

En se reportant aux diagrammes des figures 3b et 3c, on voit que le dispositif de calcul 11 détermine aisément les composantes WX et WZ à partir des données VTAS, VXSOL, VZSOL et $\gamma a$ qui lui sont adressées de la façon mentionnée ci-dessus. Le dispositif 11 délivre les composantes WX et WZ, respectivement à ses sorties 16 et 17.

La sortie 16 du dispositif de calcul 11, à laquelle apparaît la composante horizontale WX, est reliée, par l'intermédiaire d'un interrupteur commandé 18, à une borne 19. Cet interrupteur 18 est commandé par un dispositif logique 20 de façon à être ouvert si la vitesse de l'avion 2 est inférieure à un faible seuil de vitesse, de par exemple 180 km/h (c'est-à-dire si l'avion 2 roule sur le sol) ou bien si l'altitude de l'avion 2 est supérieure à un seuil d'altitude (par exemple de l'ordre de 400 m) significatif du fait que l'avion n'est pas dans une phase d'atterrissage ou de décollage. En revanche, l'interrupteur 18 est maintenu fermé par le dispositif logique 20 lorsque ces deux conditions ne sont pas réalisées, c'est-à-dire lorsque l'avion est au voisinage du sol, mais n'a pas encore touché ou quitté celui-ci. Pour pouvoir fonctionner, le dispositif logique 20 reçoit, par une liaison 21, des informations d'altitude provenant du dispositif anémométrique 12.

En aval de la borne 19, la composante WX est appliquée à l'entrée d'un dérivateur 23, susceptible de fournir à sa sortie la dérivée dWX/dt de ladite composante WX par rapport au temps t. Cette dérivée est ensuite filtrée par un filtre 24 et mise en forme par un dispositif 25.

A la sortie 26 du dispositif de mise en forme 25, la dérivée dWX/dt est, si elle est négative, amplifiée par un amplificateur 27, puis adressée à un limiteur 28, qui en limite les valeurs extrêmes, et enfin à l'une des entrées d'un additionneur 29.

En revanche, si à la sortie 26 du dispositif de mise en forme 25, la dérivée dWX/dt est positive, elle est amplifiée par un amplificateur 30, limitée en ses valeurs extrêmes par un limiteur 31 et filtrée par un filtre 32, avant d'être adressée à l'entrée positive d'un soustracteur 33. La constante de temps du filtre 32, par exemple de l'ordre de 13s, est choisie suffisamment longue pour que le filtrage obtenu constitue une mémorisation de plusieurs secondes de la valeur dWX/dt.

Par ailleurs, la borne 19 est reliée à un amplificateur 34 chargé d'amplifier la composante WX, qui est ensuite filtrée par le filtre 35, puis limitée en ses valeurs extrêmes par le limiteur 36. La valeur de la constante de temps du filtre 35, par exemple de l'ordre de 30 s, est choisie suffisamment longue pour que le filtrage obtenu constitue une mémorisation de plusieurs dizaines de secondes de WX. Ensuite, WX est adressée par le limiteur 36 à l'entrée négative du soustracteur 33. Un limiteur 37, ne laissant passer que les soldes positifs des soustractions opérées par le soustracteur 33, adresse ce solde positif à une autre entrée positive de l'addiditionneur 29. La sortie de celui-ci est réunie à une entrée positive d'un autre additionneur 38.

De plus, la sortie 17 du dispositif de calcul 11, à laquelle apparaît la composante verticale WZ, est reliée, par l'intermédiaire d'un interrupteur commandé 39, d'un filtre 40, d'un dispositif de mise en forme 41, d'un amplificateur 42 et d'un limiteur 43 à une autre entrée positive de l'additionneur 38, qui, ainsi peut recevoir ladite composante verticale WZ filtrée, mise en forme, amplifiée et limitée. L'interupteur 39 est commandé par un dispositif logique 44, de façon à être ouvert si le train d'atterrissage de l'avion 2 est chargé (c'est-à-dire si l'avion est au contact du sol) ou bien si l'altitude de l'avion 2 est supérieure à un seuil d'altitude (par exemple de l'ordre de 400 m) significatif du fait que l'avion 2 n'est pas dans une phase de décollage ou d'atterrissage. Par suite, le dispositif logique 44 reçoit, par une liaison 45, des informations de pression délivrées par des capteurs (non représentés) montés sur le train d'atterrissage de l'avion 2 et, par une liaison 46 (analogue à la liaison 22 du dispositif logique 20) des informations d'altitude provenant du dispositif anémométrique 12.

Le signal apparaissant à la sortie de l'additionneur 38 est amplifié par un amplificateur 47, puis adressé à une entrée positive d'un additionneur 48, dont une autre entrée positive reçoit par ailleurs, après filtrage par un filtre 49, la valeur d'incidence mesurée par les sondes d'incidence 15. De plus, dans un comparateur 50, le signal de sortie de l'additionneur 38 est comparé au signal d'incidence issu du filtre 49 et amplifié par un amplificateur 51.

Le signal apparaissant à la sortie 52 de l'additionneur 48, et éventuellement celui apparaissant à la sortie 53 du comparateur 50, sont adressés à un dispositif de traitement de signal d'alarme 54, susceptible de délivrer un signal d'alarme à sa sortie 55. Le dispositif 54 reçoit de plus, à une entrée 56, des informations concernant l'état des becs et des volets de la voilure de l'avion 2, et provenant soit de capteurs, soit d'un calculateur de bord (non représentés).

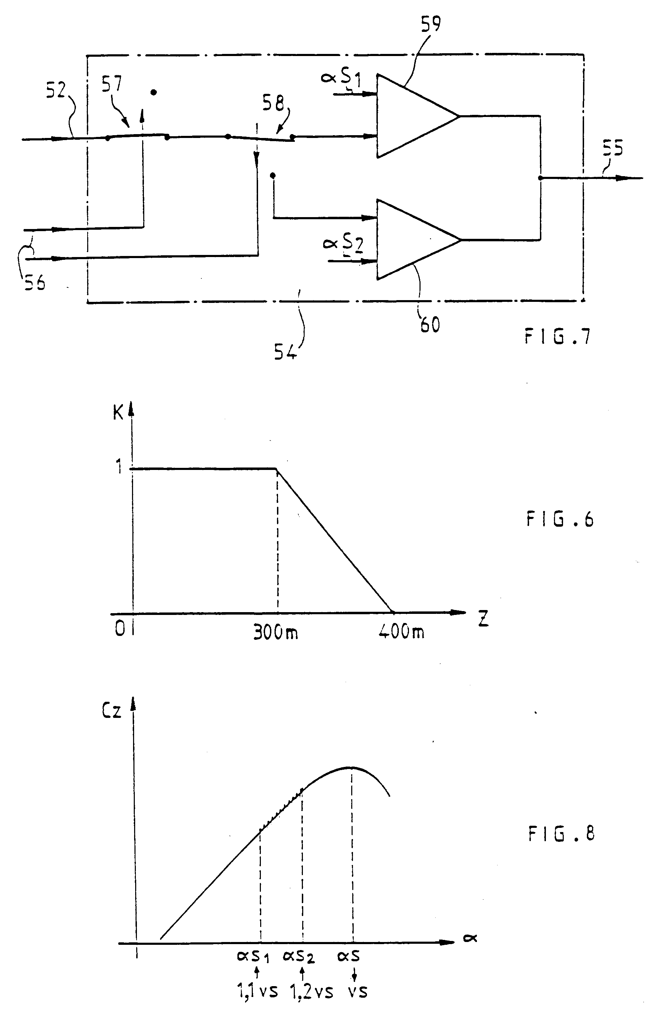

On expliquera maintenant le fonctionnement du système de la figure 4, à l'aide des commentaires faits ci-dessus en regard des figures 2a, 2b, 2c et 3a, 3b, 3c. La figure 5, mise en regard des figures 2a, 2b et 2c illustre le fonctionnement dudit système de la figure 4.

Lorsque l'avion 2 pénètre dans la minitornade 1 (instant t1), il commence par rencontrer une composante WX porteuse (partie K1 de la courbe (K)) avec une dérivée dWX/dt positive qui durera pendant la traversée de la région (I) et qui se comporte comme un gradient d'incidence porteur. Par suite, la branche de circuit 24, 25, 26, 30, 31 et 32 applique à l'entrée positive du soustracteur 33 le signal a illustré sur la figure 5. De ce signal a est soustraite, par le soustracteur 33, la composante WX mémorisée par le filtre 35 et représentée par le signal b de la figure 5. Par suite, à la sortie du soustracteur 33, et donc à l'entrée correspondante de l'additionneur 29, apparaît le signal a-b. Lorsque, plus tard, (instant t6), apparaît la composante WZ qui croît selon L1, le circuit 40-43 applique à l'entrée positive correspondante de l'additionneur 38 un signal c. Par ailleurs, à l'instant t2, la dérivée dWX/dt devient négative et la branche 27-28 délivre à l'entrée correspondante de l'additionneur 29 un signal d.

Par suite, à la sortie de l'additionneur 38, il apparaît un signal de compensation d'incidence $\alpha$w qui est composé (voir la figure 5) :
- du signal a-b entre les instants t1 et t6 ;
- du signal $\overline{a-b}$ + c entre les instants t6 et t2 ; et
- du signal $\overline{a-b+c}$ + d après l'instant t2.

Le signal de compensation d'incidence $\alpha$w est amplifié par l'amplificateur 47. Le gain K dudit amplificateur 47 est avantageusement fonction de l'altitude de l'avion 2, afin de ne pas déclencher une alarme intempestive lorsque l'avion se trouve à une altitude à laquelle il ne risque pas d'être plaqué au sol par la minitornade 1. Sur la figure 6, on a représenté un exemple de variation pour le gain dudit amplificateur 47 : ce gain est constant, et par exemple égal à 1, entre 0 et 300 m d'altitude et varie linéairement de 1 à 0 entre 300 m et 400 m d'altitude, et vice-versa. Pour ce faire, l'amplificateur 47 est du type à gain variable et ce gain est commandé par le dispositif anémométrique 12.

Sur la figure 7, on a représenté un exemple de réalisation du dispositif de traitement de signal 54. Dans cet exemple, on ne prend pas en considération la différence entre l'information d'incidence $\alpha$ et le signal de compensation d'incidence $\alpha$w donnée par le comparateur 50.

Le dispositif 54 de la figure 7 comporte un interrupteur et un commutateur commandés 57 et 58, montés en série et reliés à l'entrée 52 sur laquelle apparaît le signal $\alpha$ + $\alpha$w . L'interrupteur 57 est commandé par l'entrée 56 de façon à être ouvert, lorsque tous les becs et volets sont rentrés (configuration lisse de vol de croisière), et à être fermé lorsque les volets et becs sont sortis, en vue d'un décollage ou d'un atterrissage. Par ailleurs, le commutateur 58 est commandé par l'entrée 56 de façon à assurer la liaison entre l'entrée 52 et soit l'une des entrées d'un comparateur 59, lorsque la confiration des becs et volets correspond à un atterrissage de l'avion 2, soit l'une des entrées d'un comparateur 60, lorsque la configuration des becs et volets correspond au décollage de l'avion 2. Les autres entrées des comparateurs 59 et 60 reçoivent respectivement un seuil $\alpha$S1 ou $\alpha$S2, correspondant respectivement à une incidence de décrochage prédéterminée en cas de minitornade, respectivement lors de l'atterrissage et lors du décollage. Les sorties des comparateurs 59 et 60 sont reliées à la sortie 55.

Sur la figure 8, on a représenté la courbe bien connue donnant, pour une configuration déterminée d'un avion déterminé, le coefficient de portance Cz en fonction de l'incidence $\alpha$. De façon connue, cette courbe permet de déterminer l'incidence $\alpha$S, à laquelle l'avion 2 décroche, cette incidence de décrochage $\alpha$S correspondant à une vitesse de décrochage VS.

Pour déterminer les seuils $\alpha$S1 et $\alpha$S2 appliqués aux comparateurs 59 et 60, on commence par se fixer, en fonction de la vitesse de décrochage VS, une vitesse limite VL, par exemple égale à 1,1 VS ou 1,2 VS au-dessous de laquelle on risque de décrocher en configuration d'atterrissage ou de décollage respectivement, et, à l'aide de la courbe de la figure 8, on détermine les seuils d'incidence respectifs $\alpha$S1 et $\alpha$S2 à appliquer aux compara-

teurs 59 et 60.

Ainsi, en fonction de la configuration d'atterrissage ou de décollage, le signal α + α w est comparé au seuil α S1 ou au seuil αS2. Le signal apparaissant à la sortie 55 est représentatif du résultat de cette comparaison et, dès que le signal signal α + αw devient égal à α S1, ou αS2 respectivement, il constitue le signal d'alarme indiquant que la minitornade met en danger la stabilité de l'avion 2.

**Revendications**

1. Système pour l'élaboration à bord d'un aéronef d'un signal d'alarme en cas de minitornade, comportant un dispositif de calcul (11) permettant l'obtention de signaux représentatifs des vitesses du vent horizontal et du vent vertical auxquels est soumis ledit aéronef, à partir des informations de vitesses, d'assiette et d'incidence délivrées par l'équipement de bord (12, 13, 15) dudit aéronef, caractérisé en ce qu'il comporte :
   - des moyens de dérivation (23, 24, 25) pour calculer la dérivée du signal représentatif de ladite vitesse du vent horizontal par rapport au temps ;
   - des premiers moyens (30, 31, 32) pour former un premier signal représentatif des valeurs positives de ladite dérivée ;
   - des seconds moyens (27, 28) pour former un second signal représentatif des valeurs négatives de ladite dérivée ;
   - des premiers moyens de sommation (29, 33, 38) délivrant un troisième signal obtenu par l'addition dudit signal représentatif de ladite vitesse du vent vertical et desdits premier et second signaux et par la soustraction du signal représentatif de la vitesse moyenne du vent horizontal pendant une période antérieure à celle des opérations effectuées par ledit système ;
   - des seconds moyens de sommation (48) pour former la somme de ladite information d'incidence et dudit troisième signal ;
   - des moyens pour comparer ladite somme et un seuil prédéterminé d'incidence garantissant une énergie minimale de sécurité de l'aéronef ; et
   - des moyens d'alarme susceptibles d'émettre un signal d'alarme lorsque ladite somme est supérieure audit seuil prédéterminé d'incidence.

2. Système selon la revendication 1, caractérisé en ce qu'il comporte des moyens (34, 35, 36) pour délivrer auxdits premiers moyens de sommation (29, 33, 38) la valeur moyenne sur plusieurs dizaines de secondes de ladite vitesse de vent horizontal.

3. Système selon la revendication 2, caractérisé en ce qu'il comporte des moyens de limitation (37) ne permettant de soustraire, dans ledit troisième signal, ladite valeur moyenne de la vitesse de vent horizontal que lorsque la valeur absolue de celle-ci est inférieure à ladite valeur moyenne des valeurs positives de ladite dérivée.

4. Système selon la revendication 1, caractérisé en ce que ledit premier signal délivré par lesdits premiers moyens correspond à la valeur moyenne sur plusieurs secondes des valeurs positives de ladite dérivée, ladite moyenne s'établissant avec une constante de temps plus faible que celle de son effacement.

5. Système selon la revendication 1, caractérisé en ce qu'il comporte, entre ledit dispositif de calcul (11) d'une part et lesdits moyens de dérivation, lesdits premiers et seconds moyens et lesdits premiers moyens de sommation d'autre part, des moyens d'interruption commandée,ouverts lorsque ledit aéronef n'est pas en phase de décollage ou d'atterrissage.

6. Système selon la revendication 1, caractérisé en ce qu'un amplificateur, dont le gain est variable en fonction de l'altitude dé l'aéronef (2), est disposé entre lesdits premiers et seconds moyens de sommation.

7. Système selon l'une des revendications 1 ou 6, caractérisé en ce qu'il comporte des moyens de comparaison de ladite information d'incidence et dudit troisième signal.

8. Système selon la revendication 1, caractérisé en ce que ledit seuil prédéterminé d'incidence correspond à une vitesse de l'aéronef supérieure d'au moins 10 % à la vitesse de décrochage de l'avion.

9. Système selon l'une des revendications 1 ou 8, caractérisé en ce que la valeur dudit seuil prédéterminé d'incidence dépend de la configuration des surfaces aérodynamiques mobiles de l'aéronef.

10. Système selon la revendication 9, caractérisé en ce que la valeur dudit seuil prédéterminé d'incidence est choisie plus grande pour l'atterrissage que pour le décollage.

## Claims

1. System for producing, on board an aircraft, an alarm signal in the event of a minitornado, comprising a calculating device (11) making it possible to obtain signals representative of the speeds of the horizontal wind and of the vertical wind to which the said aircraft is subjected, on the basis of speed, attitude and incidence information delivered by the on-board equipment (12, 13, 15) of the said aircraft, characterised in that it comprises:
   - differentiating means (23, 24, 25) for calculating the derivative of the signal representative of the said speed of the horizontal wind with respect to time;
   - first means (30, 31, 32) for forming a first signal representative of the positive values of the said derivative;
   - second means (27, 28) for forming a second signal representative of the negative values of the said derivative;
   - first summing means (29, 33, 38) delivering a third signal obtained by addition of the said signal representative of the said speed of the vertical wind and the said first and second signals and by subtraction of the signal representative of the mean speed of the horizontal wind during a period prior to that of the operations effected by the said system;
   - second summing means (48) for forming the sum of the said incidence information item and the said third signal;
   - means for comparing the said sum with a predetermined incidence threshold guaranteeing minimum safety energy of the aircraft; and
   - alarm means capable of emitting an alarm signal when the said sum is greater than the said predetermined incidence threshold.

2. System according to Claim 1, characterised in that it comprises means (34, 35, 36) for delivering the mean value of the said horizontal wind speed over several tens of seconds to the said first summing means (29, 33, 38).

3. System according to Claim 2, characterised in that it comprises limiting means (37) making it possible to subtract, from the said third signal, the said mean value of the horizontal wind speed only when the absolute value of the latter is less than the said mean value of the positive values of the said derivative.

4. System according to Claim 1, characterised in that the said first signal delivered by the said first means corresponds to the mean value over several seconds of the positive values of the said derivative, the said mean being established with a time constant lower than that of its elimination.

5. System according to Claim 1, characterised in that it comprises, between the said calculating device (11) on the one hand and the said differentiating means, the said first and second means and the said first summing means on the other hand, controlled switching means, which are open when the said aircraft is not in the take-off or landing phase.

6. System according to Claim 1, characterised in that an amplifier, whose gain is variable as a function of the altitude of the aircraft (2), is arranged between the said first and second summing means.

7. System according to one of Claims 1 or 6, characterised in that it comprises means of comparison of the said incidence information item with the said third signal.

8. System according to Claim 1, characterised in that the said predetermined incidence threshold corresponds to a speed of the aircraft greater by at least 10% than the stall speed of the aircraft.

9. System according to one of Claims 1 or 8, characterised in that the value of the said predetermined incidence threshold depends on the configuration of the movable aerodynamic surfaces of the aircraft.

10. System according to Claim 9, characterised in that the value of the said predetermined incidence threshold is chosen so as to be greater for landing than for take-off.

## Patentansprüche

1. System zur Erzeugung eines Alarmsignals an Bord eines Luftfahrzeugs im Fall eines Minitornados, mit einer Rechnervorrichtung (11) zum Bilden von für die horizontale und vertikale Windgeschwindigkeit, denen das Luftfahrzeug ausgesetzt ist, repräsentativen Signalen, ausgehend von den von Bordausrüstungen (12, 13, 15) des besagten Luftfahrzeugs gelieferten Geschwindigkeits-, Trimmlagen- und Anstellwinkelinformationen, dadurch gekennzeichnet, daß es umfaßt:

- Ableitungsmittel (23, 24, 25) zum Berechnen der zeitlichen Ableitung des für die besagte horizontale Windgeschwindigkeit repräsentativen Signals;
- erste Mittel (30, 31, 32) zum Bilden eines ersten, für die positiven Werte der besagten Ableitung repräsentativen Signals;
- zweite Mittel (27, 28) zum Bilden eines zweiten, für die negativen Werte der besagten Ableitung repräsentativen Signals;
- erste Summiermittel (29, 33, 38) zum Liefern eines dritten Signals aus der Addition des besagten für die besagte vertikale Windgeschwindigkeit und den besagten ersten und zweiten Signalen und aus der Subtraktion des für die mittlere horizontale Windgeschwindigkeit repräsentativen Signals während einer vor den von dem besagten System ausgeführten Arbeitsgängen liegenden Zeitdauer;
- zweite Summiermittel (48) zum Bilden der Summe der besagten Anstellwinkelinformation und des besagten dritten Signals;
- Mittel zum Vergleichen der besagten Summe und einer vorgegebenen Schwelle, wodurch eine minimale Sicherheitsenergie des Luftfahrzeugs garantiert wird; und
- Warnmittel zum Angeben eines Warnsignals, wenn die besagte Summe größer als die vorgegebene Schwelle für den Anstellwinkel ist.

2. System nach Anspruch 1,
dadurch gekennzeichnet, daß es Mittel (34, 35, 36) zum liefern das Mittelwertes über mehrere Zehn Sekunden der besagtem horizontalen Windgeschwindigkeit an die ersten Summiermittel (29, 33, 38) umfaßt.

3. System nach Anspruch 2,
dadurch gekennzeichnet, daß es Begrenzungsmittel (37) umfaßt, die in dem besagten dritten Signal die Subtraktion des besagten Mittelwertes der horizontalen Windgeschwindigkeit erlauben, erst wenn deren absoluter Wert kleiner ist als der besagte Mittelwert der positiven Werte der besagten Ableitung.

4. System nach Anspruch 1,
dadurch gekennzeichnet, daß das besagte erste von den besagten ersten Mitteln gelieferte Signal dem Mittelwert über mehrere Sekunden der positiven Werte der besagten Ableitung entspricht, wobei der besagte Mittelwert sich mit einer kleineren Zeitkonstante als der seiner Löschung einstellt.

5. System nach Anspruch 1,
dadurch gekennzeichnet, daß es zwischen der besagten Rechnervorrichtung (11) einerseits und den besagten Ableitungsmitteln, den besagten ersten und zweiten Mitteln und den besagten ersten Summiermitteln andererseits Mittel zur gesteuerten Unterbrechung aufweist, die offen sind, wenn sich das Luftfahrzeug nicht in der Start- oder Landephase befindet.

6. System nach Anspruch 1,
dadurch gekennzeichnet, daß ein Verstärker, dessen Verstärkung variabel als Funktion der Höhe des Luftfahrzeugs (2) ist, zwischen den besagten ersten und zweiten Summiermitteln angeordnet ist.

7. System nach einem der Ansprüche 1 oder 6, dadurch gekennzeichnet, daß es Vergleichsmittel für die besagte Anstellwinkelinformation und das besagte dritte Signal umfaßt.

8. System nach Anspruch 1,
dadurch gekennzeichnet, daß der Wert der vorgegebenen Schwelle für den Anstellwinkel einer Geschwindigkeit des Luftfahrzeugs entspricht, der um wenigstens 10% größer ist als die Abkippgeschindigkeit des Luftfahrzeugs.

9. System nach einem der Ansprüche 1 oder 8, dadurch gekennzeichnet, daß der Wert besagten vorgegebenen Schwelle für den Anstellwinkel von der Konfiguration der beweglichen aerodynamischen Flächen des Luftfahrzeugs abhängt.

10. System nach Anspruch 9,
dadurch gekennzeichnet, daß der Wert der besagten vorgegebenen Schwelle für den Anstellwinkel für die Landung größer gewählt wird als für den Start.

FIG.1

F I G . 2a

F I G . 2b

F I G . 2c

F I G . 5

FIG.3a

FIG.3b

FIG.3c

FIG. 4

FIG.7

FIG.6

FIG.8